# EUROPÄISCHE PATENTSCHRIFT

(11) **EP 2 862 453 B1**
(45) Veröffentlichungstag und Bekanntmachung des Hinweises auf die Patenterteilung: **28.10.2015**
(21) Anmeldenummer: 13005001.6
(22) Anmeldetag: 18.10.2013
(51) Int. Cl.: A23L 3/3409, A23B 4/03, A23B 4/044, A23B 7/144

(54) **Lebensmittelbehandlungsanlgae**
Food treatment system
Installation de traitement de produits alimentaires

(43) Veröffentlichungstag der Anmeldung: 22.04.2015
(73) Patentinhaber: Schröter Technologie GmbH & Co. KG, 33829 Borgholzhausen (DE)
(72) Erfinder: Schröter, Max, 33790 Halle (Hesseln) (DE)
(74) Vertreter: Schober, Mirko

(56) Entgegenhaltungen:
- EP-A2- 0 709 634
- DE-A1- 10 339 296
- DE-U1-202006 015 151
- US-A- 928 900
- US-A1- 2003 159 595

## Beschreibung

Die Erfindung betrifft eine Lebensmittelbehandlungsanlage zum Reifen, Räuchern oder Trocknen von Lebensmitteln nach dem Oberbegriff des Anspruchs 1.

Entsprechende Anlagen weisen eine Behandlungskammer auf, in welche zumeist Lebensmitteltransportvorrichtungen, wie Wagen, mit darauf gelagerten, zu behandelnden Lebensmitteln eingebracht werden können. Die Behandlungskammer ist in der Regel von einer Decke, einem Boden und zumindest zwei gegenüber liegenden, in Längsrichtung verlaufenden Seitenwänden begrenzt. Im Bereich der Decke ist vor jeder Seitenwand eine über die Länge der Seitenwand in Längsrichtung sich erstreckende Sammel- oder Verteilleitung zum Abführen oder Zuführen eines Behandlungsmediums aus der Behandlungskammer oder in die Behandlungskammer vorgehen. Von diesen Sammel-und Verteilleitungen aus gehen in Richtung des Bodens rohrartige Verteilelemente ab. Diese weisen über deren gesamte oder einen Teil ihrer Längserstreckungsrichtung verteilte Öffnungen auf, durch welche das Behandlungsmedium in die Behandlungskammer in einer Einblasrichtung eingeblasen oder angesaugt wird. Die Einrichtung kann im Wechsel betrieben werden, d.h. an der einen Seitenwand wird ein Behandlungsmedium in die Kammer durch die Öffnungen eingeblasen, an der anderen Seite wird das Behandlungsmedium abgesaugt, so dass eine gerichtete Querströmung des Behandlungsmediums über die Behandlungskammer erzeugt wird.

Nachteilig bei dieser Vorgehensweise ist, dass diejenigen Lebensmittelerzeugnisse, welche benachbart zu den Ausblasöffnungen positioniert werden, wesentlich stärker dem Behandlungsmedium ausgesetzt werden als solche Lebensmittelerzeugnisse, welche sich entfernt von den Ausblasöffnungen befinden. Ist das Behandlungsmedium beispielsweise Luft, so erfolgt bei den benachbart zu den Öffnungen befindlichen Lebensmitteln etwa eine Trocknung wesentlich rascher als bei den weiter entfernt liegenden Lebensmitteln. Dies führt zu einer ungleichmäßigen Behandlung innerhalb einer Charge.

Aufgabe der vorliegenden Erfindung ist es daher, eine Lebensmittelbehandlungsanlage der eingangs genannten Art anzugeben, bei der die erwähnten Nachteile nicht auftreten und eine gleichmäßige Behandlung der Lebensmittel ermöglicht wird.

Gelöst wird diese Aufgabe durch eine Lebensmittebearbeitungsvorrichtung mit den Merkmalen des Anspruchs 1. Vorteilhafte Ausführungsformen finden sich in den Unteransprüchen.

Erfindungsgemäß ist vorgesehen, dass die Öffnungen so angeordnet sind, dass das aus der Sammel- oder Verteilleitung in die Verteilelemente strömende Behandlungsmedium, bei welchem es sich bevorzugt um ein Gas - dies schließt auch ein Gasgemisch wie z.B. Luft ein - und/oder Rauch handelt, zumindest mit einer Komponente in Richtung auf eine den Verteilelementen jeweils benachbarte Seitenwand ausgeblasen wird.

Durch diese Maßnahme werden die zu den Verteilelementen benachbarten Lebensmittel nicht mehr direkt mit dem Behandlungsmedium beströmt, sondern das Behandlungsmedium tritt rückseitig aus den Verteilelementen aus und trifft zunächst auf die benachbarte Wand. An den Seitenwänden wird das Medium "reflektiert" und gelangt erst nach dieser Reflexion in Kontakt mit den Lebensmitteln in der Behandlungskammer. Es entsteht durch Absaugen an der gegenüberliegenden Seitenwand eine diffuse Querströmung, welche dazu führt, dass das Behandlungsmedium in Querrichtung besser verteilt wird als dies beim direkten Anblasen der Lebensmittel der Fall wäre. Dies bedingt zudem einen wesentlich homogeneren Behandlungsprozess und eine bessere Qualität der behandelten Produkte.

Bevorzugt ist eine Umschaltvorrichtung vorgesehen, welche dazu ausgelegt ist, abwechselnd die beiden Sammel- oder Verteilleitungen mit dem Behandlungsmedium zu beschicken. Dadurch kann eine noch homogenere Verteilung des Behandlungsmediums in der Behandlungskammer erreicht werden. Die Umschaltintervalle können beliebig vorgegeben werden; sie können bevorzugt wenige Minuten (z.B. 2 Minuten) bis zu einer Stunde betragen.

Um auch in Höhenrichtung (d.h. vertikal zum Boden) eine gleichmäßige Verteilung des Behandlungsmediums sicherzustellen, können die Verteilelemente bevorzugt in verschiedenen Längen vorgesehen werden, so dass sowohl oben in der Behandlungskammer als auch unten das Ausblasen des Behandlungsmediums mit etwa gleichem Druck stattfindet und sich nach Möglichkeit kein Druckgradient in Vertikalrichtung ergibt.

Dazu kann z.B. vorgesehen sein, dass in Längsrichtung nebeneinander oder in Querrichtung der Behandlungskammer hintereinander Verteilelemente verschiedener Länge vorgesehen sind. Insbesondere kann bei Hintereinanderanordnung in Querrichtung das jeweils kürzere Verteilelement zwischen der jeweiligen Wand und dem jeweils längeren Verteilelement vorgesehen sein. Zudem kann vorgesehen sein, dass das längere Verteilelement gegenüber einem benachbarten kürzeren Verteilelement Öffnungen lediglich in dem gegenüber dem kürzeren Verteilelement überstehenden Abschnitt aufweist. Dadurch wird erreicht, dass das kürzere Verteilelement ausschließlich für eine diffuse Querströmung in einem in Vertikalrichtung höher gelegenen Bereich sorgt, während das längere Verteilelement entsprechend einen in vertikaler Richtung tiefer liegenden Abschnitt der Behandlungskammer mit Behandlungsmedium beschickt. Es sind bevorzugt Verteilelemente mit zwei verschiedenen Längen vorgesehen. Je nach Höhe der Behandlungskammer können aber auch an jeder Seitenwand Verteilelemente mit wenigstens drei verschiedenen Längen vorgesehen sein.

Die Erfindung wird nachfolgend anhand der Figuren 1A bis 2C näher erläutert.
- Figur 1A -: zeigt einen Querschnitt durch eine Behandlungskammer einer erfindungsgemäßen Lebensmittelbehandlungsvorrichtung,
- Figur 1B -: zeigt eine Draufsicht auf die Behandlungskammer,
- Figur 1C -: zeigt eine schematische Darstellung eines Verteilelements und der benachbarten Seitenwand sowie das Ausströmverhalten des Behandlungsmediums,
- Figur 2A -: zeigt einen Ausschnitt der Behandlungskammer mit Verteilelementen nach einer Ausführungsform der Erfindung,
- Figur 2B -: zeigt einen Ausschnitt der Behandlungskammer mit Verteilelementen nach einer weiteren Ausführungsform der Erfindung,
- Figur 2C -: zeigt einen Querschnitt durch die Behandlungskammer mit Verteilelementen nach einer modifizierten Ausführungsform der Erfindung.

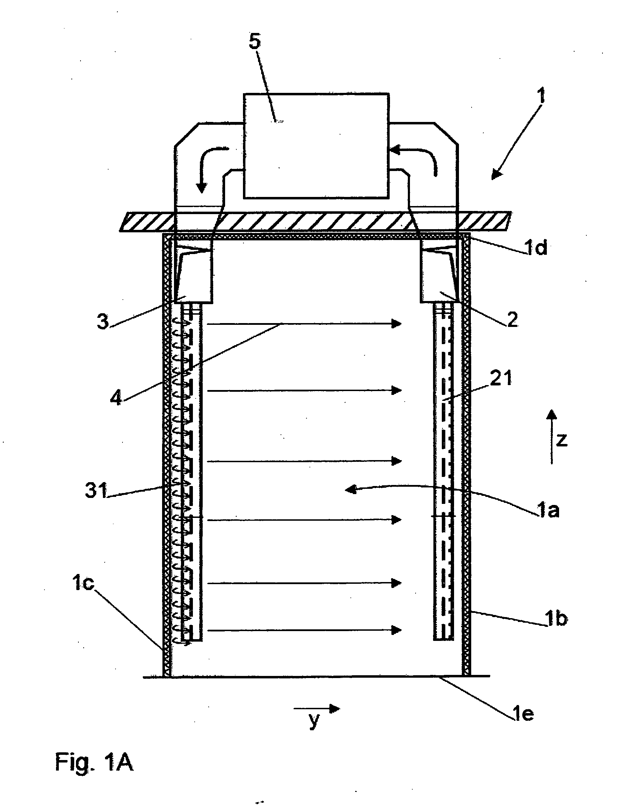

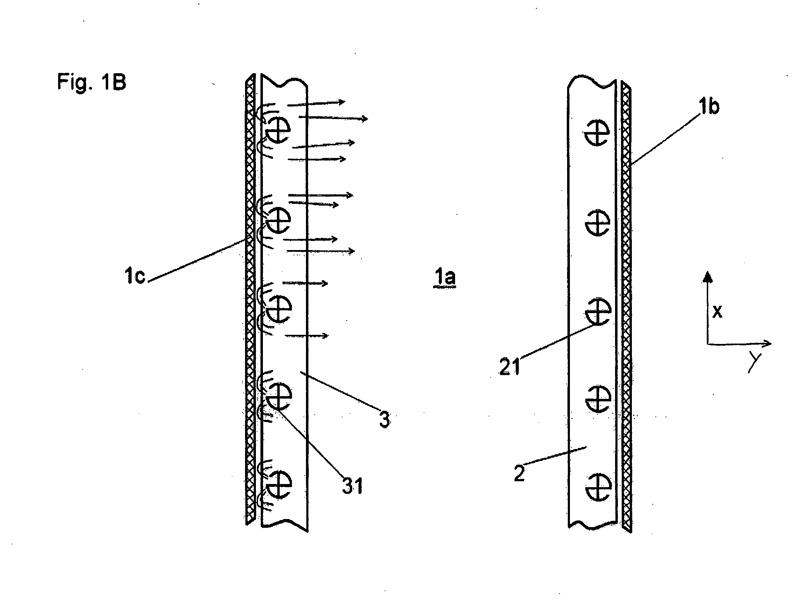

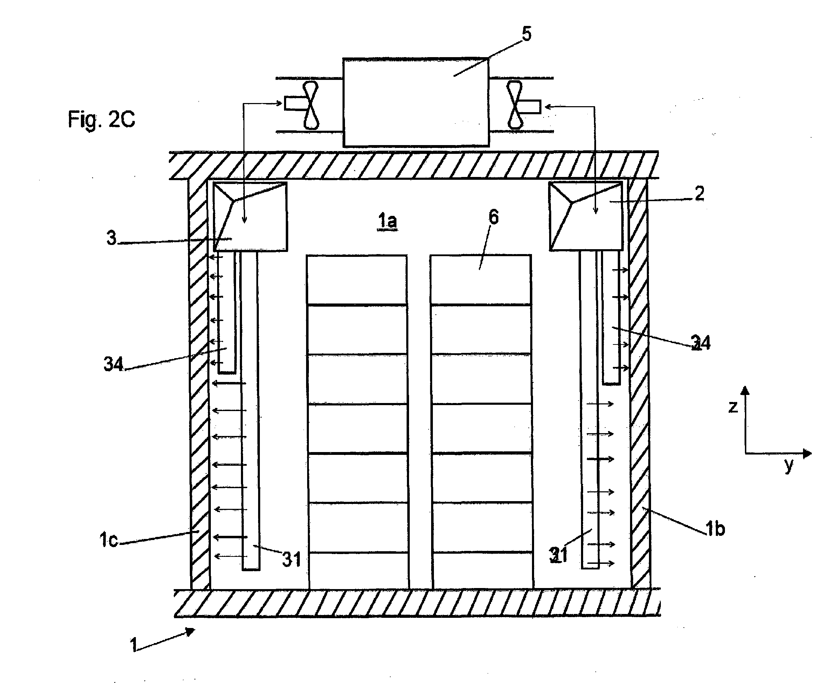

Von der erfindungsgemäßen Lebensmittelbehandlungsanlage ist in den Figuren 1A und 1B eine Behandlungskammer 1 gezeigt. Die erfindungsgemäße Anlage kann eine Mehrzahl solcher Behandlungskammern 1 aufweisen. Die Behandlungskammer 1 weist einen Behandlungsraum 1a auf, in dem zu behandelnde Lebensmittel platziert werden. Dieser Behandlungsraum 1a wird an der in Vertikalrichtung Z unteren Seite durch den Boden 1e, an der Oberseite durch eine Decke 1d und an den in Querrichtung Y liegenden Seiten durch Seitenwände 1b und 1c begrenzt. In Richtung X der Längserstreckung (Fig. 1B) der Behandlungskammer 1a können die Stirnseiten verschlossen oder verschließbar sein, um zu behandelnde Lebensmittel auf Transportwagen 6 (vgl. Fig. 2C) in die Behandlungskammer 1a einzubringen. Bevorzugt ist die Behandlungskammer 1a an beiden Stirnseiten zu öffnen, um ein "Durchführen" von Transportwagen zu ermöglichen.

Wie in den Figuren 1A und 1B zu sehen, erstrecken sich in Längsrichtung X der Behandlungskammer 1, insbesondere im Bereich der Decke 1d, benachbart zu jeder Seitenwand 1b, 1c Kanäle 2, 3, welche als Sammel- und Verteilleitung für das Behandlungsmedium dienen. Diese Kanäle 2, 3 werden über eine Umschalteinrichtung 5 alternierend mit Behandlungsmedium beschickt. Der jeweils nicht beschickte Kanal (hier im Beispiel Kanal 2) dient zum Abziehen von Behandlungsmedium aus der Behandlungskammer. So wird an einer Seite (hier Seite 1c, Kanal 3) Behandlungsmedium in die Behandlungskammer eingebracht und an der anderen Seite (Seite 1b, Kanal 2) wieder abgezogen. So entsteht in Querrichtung Y eine Strömung 4, welche die Lebensmittel mit Behandlungsmedium um-und durchströmt. Die Strömungsrichtung kann durch Umschalten mittels der Umschalteinrichtung 5 umgekehrt werden. Bevorzugt wird alle paar Minuten die Richtung umgekehrt, um ein möglichst gleichmäßiges Behandlungsergebnis zu erhalten.

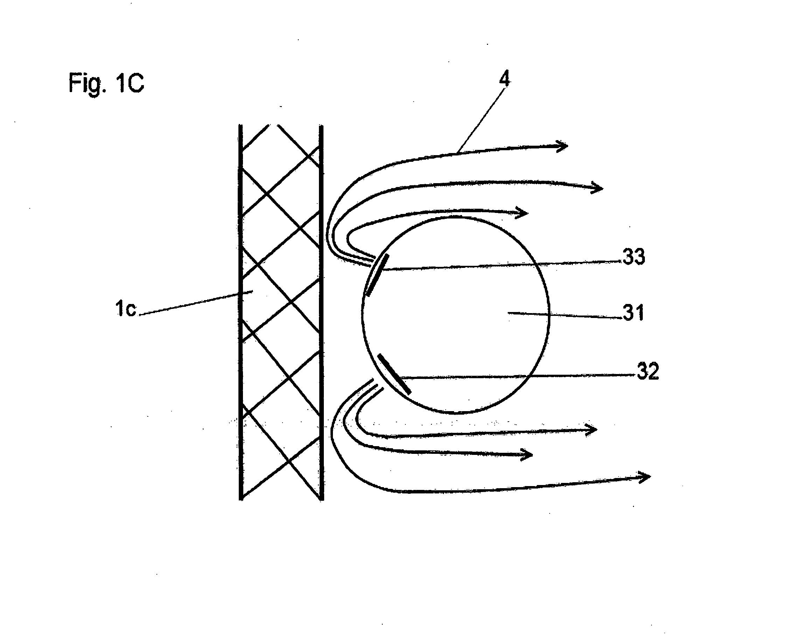

Zum Ausblasen des Behandlungsmediums sind entlang der Längserstreckung X der Kanäle 2, 3 sich in Richtung Z auf den Boden 1e erstreckende, rohrartige Verteilelemente (im Folgenden Rohre) 21, 31 vorgesehen, deren bodenseitige Stirnseiten verschlossen sind. Diese weisen Öffnungen auf, welche so angeordnet sind, dass das Behandlungsmedium mit wenigstens einer Richtungskomponente in Richtung der jeweils benachbarten Seitenwand 1b, 1c, ausgeblasen wird. Wie in Figur 1C gezeigt, sind auf einer Höhe in Richtung Z bevorzugt zwei Öffnungen 32, 33 vorgesehen - eine Öffnung genügt - welche bevorzugt so angeordnet sind, dass die benachbarte Seitenwand 1c nicht senkrecht, sondern bevorzugt in einem Winkel angeblasen wird. Dadurch ergibt sich im Bereich der Wand 1c der durch die Pfeile angedeutete diffuse Strömungsverlauf. Dadurch wird das zu behandelnde Lebensmittel in der Behandlungskammer 1a nicht direkt, sondern "diffus" angeblasen und das Behandlungsmedium in der Behandlungskammer 1a gleichmäßiger und homogener verteilt.

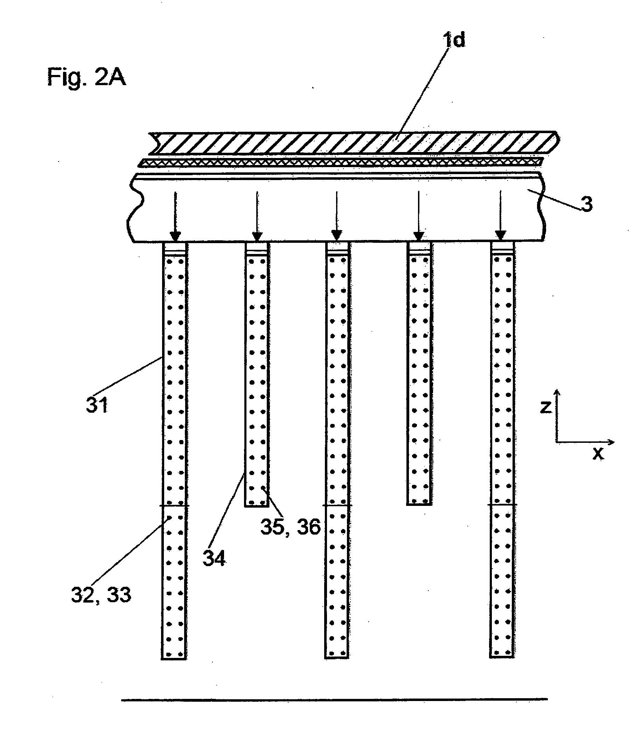

Die Öffnungen in den Rohren sind bevorzugt über deren Erstreckung in Z-Richtung verteilt angeordnet, um die gesamte Höhe der Behandlungskammer 1a gleichmäßig zu verteilen. Dies ist in der Figur 2A in einer Ausführungsvariante gezeigt. Bevorzugt, aber nicht zwingend, werden an beiden Seitenwänden 1b, 1c (hier nur für eine Seite gezeigt) Rohre 31, 34 mit unterschiedlichen Längen eingesetzt. Dies soll den Druckverlusten Rechnung tragen, die sich mit wachsender Rohrlänge ergeben. In der in Figur 2A gezeigten Variante, sind zwei unterschiedliche Längen vorgesehen, weitere Längen sind denkbar. Die kürzeren Rohre 34 beschicken in erster Linie durch ihre Öffnungen 35, 36 den oberen Bereich der Behandlungskammer, die längeren Rohre 31 beschicken durch ihre Öffnungen 32, 33 die unteren Bereich der Behandlungskammer 1a mit Behandlungsmedium.

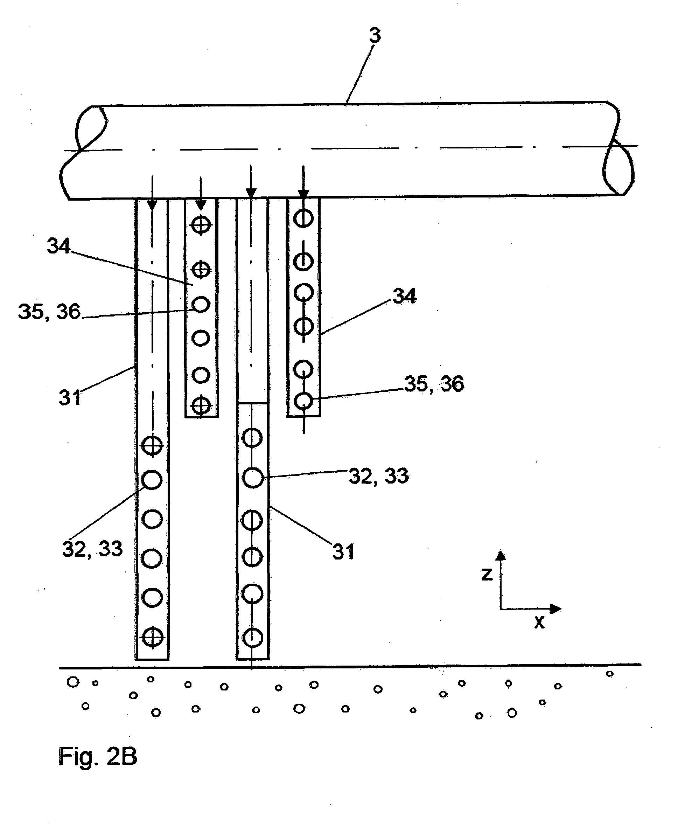

Wie in der Alternative in Figur 2B gezeigt, können bei den längeren Rohren 31 Öffnungen 32, 33 lediglich auf den Abschnitten in Z-Richtung vorgesehen sein, der von den kürzeren Rohren 34 mit den Öffnungen nicht abgedeckt wird.

Zur noch gleichmäßigeren Verteilung des Behandlungsmediums können die Rohre 31, 34 bzw. 21, 24 auch in Querrichtung Y hintereinander angeordnet werden. Dies ist in Figur 2C gezeigt. Das jeweils kürzere Rohr 24, 34 liegt dabei zwischen der benachbarten Seitenwand 1b, 1c und dem jeweils längeren Rohr 21, 31. Auch bei dieser Anordnung können mehr als zwei Rohre jeweils unterschiedlicher Länge hintereinander angeordnet werden. Die Anordnung der Öffnungen kann so gewählt werden, wie dies oben um Zusammenhang mit den anderen Ausführungsformen beschrieben wurde.

## Patentansprüche

1. Lebensmittelbehandlungsanlage zum Reifen, Räuchern oder Trocknen von Lebensmitteln, mit einer Behandlungskammer (1), welche einen Behandlungsraum (1a) aufweist, welcher zur Aufnahme von Lebensmitteltransportvorrichtungen (6) ausgelegt ist, und der von einer Decke (1d), einem Boden (1e) und zumindest zwei gegenüber liegenden, in Längsrichtung (X) verlaufenden Seitenwänden (1b, 1c) begrenzt ist, wobei vor jeder der Seitenwände (1b, 1c), insbesondere im Bereich der Decke (1d), eine sich im Wesentlichen über die Länge der Seitenwand in Längsrichtung erstreckende Sammel- oder Verteilleitung (2, 3) zum Abführen oder Zuführen eines Behandlungsmediums aus der Behandlungskammer (1) oder in die Behandlungskammer (1) vorgehen ist, wobei sich von der jeweiligen Sammel- oder Verteilleitung (2, 3) aus in Richtung (Z) des Bodens (1e) rohrartige Verteilelemente (21, 31; 34) mit über deren gesamte oder einen Teil ihrer Längserstreckungsrichtung (Z) verteilten Öffnungen (32, 33; 35, 36) erstrecken, durch welche das Behandlungsmedium in die Behandlungskammer in einer Einblasrichtung eingeblasen oder angesaugt werden kann,
**dadurch gekennzeichnet,**
**dass** die Öffnungen (32, 33; 35, 36) so angeordnet sind, dass das aus der Sammel- oder Verteilleitung (2, 3) in die Verteilelemente (21, 31; 34) strömende Behandlungsmedium zumindest mit einer Komponente in Richtung auf eine den Verteilelementen (21, 31; 34) jeweils benachbarte Seitenwand (1b, 1c) ausgeblasen wird.

2. Lebensmittelbehandlungsanlage nach Anspruch 1,
**dadurch gekennzeichnet,**
**dass** das Behandlungsmedium ein Gas und/oder Rauch aufweist.

3. Lebensmittelbehandlungsanlage nach Anspruch 1 oder 2,
**dadurch gekennzeichnet,**
**dass** eine Umschaltvorrichtung (5) vorgesehen ist, welche dazu ausgelegt ist, abwechselnd die beiden Sammel-oder Verteilleitungen (2, 3) mit dem Behandlungsmedium zu beschicken.

4. Lebensmittelbehandlungsanlage nach einem der vorigen Ansprüche,
**dadurch gekennzeichnet,**
**dass** in Längsrichtung (X) nebeneinander oder in Querrichtung (Y) hintereinander Verteilelemente (31, 34) verschiedener Länge vorgesehen sind.

5. Lebensmittebehandlungsanlage nach Anspruch 4,
**dadurch gekennzeichnet,**
**dass** bei Hintereinanderanordnung in Querrichtung (Y) das kürzere Verteilelement (34) zwischen der jeweiligen Wand (1c) und dem jeweils längeren Verteilelement (31) vorgesehen ist.

6. Lebensmittebehandlungsanlage nach Anspruch 4 oder 5,
**dadurch gekennzeichnet,**
**dass** das längere Verteilelement (31) gegenüber einem benachbarten kürzeren Verteilelement (34) Öffnungen (32, 33) lediglich in dem gegenüber dem kürzeren Verteilelement (34) überstehenden Abschnitt aufweist.

## Claims

1. Food treatment system for ripening, smoking or drying foodstuffs, with a treatment chamber (1) which has a processing chamber (1a) which is designed to receive food transport devices (6), and which is defined by a cover (1d), a base (le) and at least two opposing side walls (1b, 1c) which run in the longitudinal direction (X) wherein in front of each of the side walls (1b, 1c), more particularly in the region of the cover (1d), there is a collecting or distributing pipe (2, 3) extending in the longitudinal direction over substantially the length of the side wall for discharging or supplying a processing medium from the processing chamber (1) or into the processing chamber (1) wherein pipe-like distributing elements (21, 31; 34) extend from each of the collecting or distributing pipes (2, 3) in the direction (Z) of the base (1e), these distributing elements having openings (32, 33; 35, 36) spread out over their entire or a part of their longitudinal extension direction (Z), through which the processing medium can be blown or drawn into the processing chamber in a blow-in direction, **characterised in that**
the openings (32, 33; 35, 36) are arranged so that the processing medium flowing out of the collecting or distributing pipe (2, 3) into the distributing elements (21, 31; 34) is blown out at least with one component in the direction of a side wall (1b, 1c) which is adjacent each of the distributor elements (21, 31; 34).

2. Food treatment system according to claim 1
**characterised in that**
the processing medium comprises a gas and/or smoke.

3. Food treatment system according to claim 1 or 2
**characterised in that**
a switch-over device (5) is provided which is designed to load the two collecting or distributing pipes (2, 3) in alternation with the processing medium.

4. Food treatment system according to one of the preceding claims
**characterised in that**
distributor elements (31, 34) of different length are provided side by side in the longitudinal direction (X) or one behind the other in the transverse direction (Y).

5. Food treatment system according to claim 4
**characterised in that**
in the event of an arrangement one behind the other in the transverse direction (Y) the shorter distributor element (34) is provided between the respective wall (1c) and the respective longer distributor element (31).

6. Food treatment system according to claim 4 or 5
**characterised in that**
the longer distributor element (31) compared with an adjacent shorter distributor element (34) has openings (32, 33) only in the portion which protrudes relative to the shorter distributor element (34).

## Revendications

1. Installation de traitement de produits alimentaires pour faire mûrir, fumer ou sécher des produits alimentaires, laquelle est pourvue d'une chambre de traitement (1) qui comprend un espace de traitement (la) qui est aménagée pour la réception de dispositifs de transport de produits alimentaires (6) et est délimitée par un plafond (1d), un sol (le) et au moins deux parois latérales (1b, 1c) qui, s'étendant dans la direction longitudinale (X), sont situées à l'opposé l'une de l'autre, sachant que devant chacune des parois latérales (1b, 1c), en particulier dans la région du plafond (1d), est prévue une conduite de collection ou de répartition (2, 3), qui, s'étendant sensiblement sur la longueur de la paroi latérale, dans la direction longitudinale est prévu pour évacuer de la chambre de traitement (1) ou amener dans la chambre de traitement (1) un agent de traitement, sachant que, partant de la conduite de collection ou de répartition (2, 3) respective, s'étendent, en direction (Z) du sol (le), des éléments de répartition (21, 31; 34) genre tubes, qui sont pourvus d'ouvertures (32, 33 ; 35, 36), réparties sur toute ou sur une partie de leur direction longitudinale (Z), par lesquelles l'agent de traitement peut être soufflé au moyen d'un dispositif de soufflage dans la chambre de traitement ou en être évacué par aspiration,
**caractérisée en ce que**
les ouvertures (32, 33; 35, 36) sont disposées de telle manière que l'agent de traitement, qui s'écoule de la conduits de collection ou de répartition (2, 3) dans les éléments de répartition (21, 31; 34), soit soufflé avec au moins un composant en direction d'une paroi latérale (1b, 1c) respectivement voisine des éléments de répartition (21, 31 ; 34).

2. Installation de traitement de produits alimentaires selon la revendication 1,
**caractérisée en ce que**
l'agent de traitement comprend un gaz et/ou de la fumée

3. Installation de traitement de produits alimentaires selon revendication 1 ou 2,
**caractérisée en ce que**
l'on prévoit un dispositif de commutation (5) qui est conçu pour le remplissage alternatif de deux conduits de collection ou de répartition (2, 3) avec l'agent de traitement.

4. Installation de traitement de produits alimentaires selon l'une des revendications précédentes
**caractérisée en ce que**
sont prévus des éléments de répartition (31, 34) de longueur différente, qui sont disposés les uns à côtés des autres dans la direction longitudinale (X) ou les uns derrière les autres dans la direction transversale (Y).

5. Installation de traitement de produits alimentaires selon la revendication 4,
**caractérisée en ce que**,
lors d'un agencement les uns derrière les autres dans la direction transversale (Y), chaque élément de répartition plus court (34) est prévu entre la paroi (1c) et un élément de répartition plus long (31) respectifs.

6. Installation de traitement de produits alimentaire s selon revendication 4 ou 5,
**caractérisée en ce que**
l'élément de répartition plus long (31), par rapport à un élément de répartition plus court (34) voisin, n'est doté d'ouvertures (32, 33) que dans la section en saillie de l'élément de répartition plus court (34).
